# EUROPEAN PATENT SPECIFICATION

(11) **EP 4 003 886 B1**
(45) Date of publication and mention of the grant of the patent: **03.04.2024**
(21) Application number: 20767871.5
(22) Date of filing: 24.07.2020
(51) Int. Cl.: B65G 65/23

(54) **A DEVICE FOR LIFTING AND TILTING A VAT WITH A MIXTURE**
VORRICHTUNG ZUM HEBEN UND KIPPEN EINER WANNE MIT EINER MISCHUNG
DISPOSITIF DE LEVAGE ET D'INCLINAISON D'UNE CUVE CONTENANT UN MÉLANGE

(30) Priority: 26.07.2019 BE 201905494
(43) Date of publication of application: 01.06.2022
(73) Proprietor: van Oost, Luc, 9910 Aalter (BE)
(72) Inventor: van Oost, Luc, 9910 Aalter (BE)
(74) Representative: Gevers Patents
(86) International application number: PCT/IB2020/057020
(87) International publication number: WO 2021/019402

(56) References cited:
- EP-A1- 1 057 759
- CN-A- 104 276 412
- CN-A- 104 326 276
- DE-A1- 1 756 696
- DE-U1-202007 003 754
- JP-A- H03 200 629
- US-B1- 6 238 165

## Description

### Technical domain

The present invention relates to the use of a device for lifting and tilting a vat with a mixture, preferably a dough.

### Prior Art

Devices for lifting and tilting a vat with a mixture, such as for example a dough, are for example known from GB 2 015 889 A, DE 100 13 595 A1 and DE 42 09 689 A1. Such devices are arranged for lifting and tilting the vat from an upright position, in which the vat is positioned at ground level next to a processing unit for processing the mixture, to a tilted position, in which the vat is positioned over a horizontal supply opening at the top of the processing unit, for pouring the mixture out of a pouring opening of the vat in the processing unit. For lifting and tilting the vat in this way, the device is provided with a conveyor system for a holder for the vat. The conveyor system comprises a vertical guide, extending along a height direction, and followed at the top by a curved guide which is curved about a rotation axis perpendicular to the height direction. The holder is slidably mounted to the combination of the vertical guide and the curved guide. The holder is slidable on the vertical guide in the height direction for lifting a vat mounted to the holder, and the holder is slidable on the curved guide for rotating about the rotation axis and thus tilting a vat mounted to the holder.

The disadvantage of such a device is that the motion of tilting the vat by sliding the holder on the curved guide requires a large amount of space above the device. Such a device is therefore not suitable for use in spaces where, between the horizontal supply opening of the processing unit and the ceiling of the space, enough clearance is available for placing the vat in a tilted position therebetween, but not enough to allow the vat to be tilted to the tilted position. DE1756696A1 discloses a use according to the preamble of claim 1.

### Description of the invention

The present invention aims to provide a use of a device for lifting and tilting a vat with a mixture which is suited for use in spaces where only a limited amount of clearance is available for tilting the vat.

This aim is achieved by means of a use of a device for lifting and tilting a vat with a mixture having the characteristics of the first independent claim.

To this end, the present invention provides a use of a device for lifting and tilting a vat with a mixture. The mixture is preferably a dough. The vat is provided at a top with a pouring opening for the mixture. The device is arranged for lifting and tilting the vat from an upright position at ground level to a tilted position between a predetermined first height and a predetermined second height for pouring the mixture out of the pouring opening. The device comprises a holder for the vat. The device comprises a conveyor system for the holder. The conveyor system is arranged for conveying the holder in a height direction for lifting the vat. The conveyor system is arranged for rotating the holder about a rotation axis perpendicular to the height direction for tilting the vat. The conveyor system is arranged for entraining the rotation axis when conveying the holder in the height direction. The holder is positioned at a predetermined first distance from the rotation axis.

Implemented in such a way, the conveyor system of the device offers the advantage that the vat can already be tilted while being lifted, so that during tilting, the vat never exceeds the predetermined second height, which is at least the maximum height of the vat relative to the ground level in the final tilted position of the vat. This thus makes the device according to the present invention highly suited for use in spaces where only a limited amount of clearance is available for tilting the vat.

For tilting the vat over the supply opening of a processing unit for processing the mixture, lifting and tilting the vat with the mixture in such a way may for example by achieved by first lifting the vat from the upright position at ground level next to the processing unit and tilting it towards the processing unit until the upper edge of the vat facing the processing unit is positioned at the first predetermined height, flush with the height of the supply opening of the processing unit, and substantially abuts the supply opening, or in any case substantially abuts a part of the processing unit surrounding the supply opening. From this intermediate, partially tilted position, the vat can then be further lifted and tilted in a coordinated way so that the upper edge and side of the vat facing away from the processing unit always remain just below the predetermined second height. Here, it is advantageous for the holder, and thus the vat, to be positioned at the predetermined first distance from the rotation axis, which allows the vat to be sufficiently tilted toward the processing unit in the initial step to enable further lifting and tilting of the vat below the predetermined second height.

In this example, the predetermined first height equals the height of the supply opening of the processing unit, and the predetermined second height is then positioned at least a full width of the vat above the predetermined first height. For example, the predetermined second height is positioned, for example substantially, a full width of the vat above the predetermined first height. However, it should be understood by the person skilled in the art that a slightly larger margin may be provided between the height of the supply opening and the predetermined first height, and between the maximum height of the vat in the tilted position and the predetermined second height, depending on the available clearance between the supply opening and a ceiling in a space where the device is set up. According to the invention, the second height is the maximum height of the vat relative to the ground level in the final tilted position of the vat.

If required, the conveyor system may be arranged so that the predetermined first distance is adjustable. As the predetermined first distance is increased, the height to which the holder and the vat will need to be lifted by the conveyor system in the height direction will then decrease, so that the tilting of the holder and the vat may be carried out closer to the ground level and with more power, which may be advantageous for lifting and tilting heavier vats.

In an embodiment of the device according to the present invention, the conveyor system comprises a vertical guide. The vertical guide extends along the height direction. The conveyor system comprises a supporting arm for the holder. The supporting arm is mounted to the vertical guide at a first position along the supporting arm, so that the supporting arm is slidable along the height direction on the vertical guide and so that the supporting arm is rotatable about the rotation axis. The first position is preferably a first end of the supporting arm. The holder is mounted to the supporting arm at a second position along the supporting arm so that the holder is positioned at the predetermined first distance from the rotation axis. The second position is preferably a second end of the supporting arm opposite the first end of the supporting arm.

The inventor has found that by means of the rotatable supporting arm being is slidable along the height direction on the vertical guide, a conveyor system is provided in a simple way for lifting and tilting the holder and a vat mounted thereon. Nevertheless, according to other embodiments of the invention, the conveyor system may be implemented in an alternative manner, for example using a robot arm combined with a supporting arm.

If required, the holder slidable is on the supporting arm, or the length of the supporting arm is adjustable for setting the predetermined first distance.

According to the present invention, the conveyor system is configured, while lifting and tilting the vat from the upright position to the tilted position, to simultaneously convey the holder in the height direction and rotate it about the rotation axis, preferably so that the vat, when mounted on the holder, does not exceed the predetermined second height during lifting and tilting.

This embodiment offers the advantage that the device according to the present invention is easy to operate by a user, as it is already configured for lifting and tilting the vat from the upright position to the tilted position simultaneously and in the desired coordinated way, preferably so that during lifting and tilting, the vat does not exceed the predetermined second height.

According to the present invention, the conveyor system comprises a first motor for driving the conveyance in the height direction of the holder. The conveyor system comprises a second motor for driving the rotation about the rotation axis of the holder. The conveyor system comprises a control unit for controlling the first motor and the second motor.

According to the present invention, the control unit is configured, while lifting and tilting the vat from the upright position to the tilted position, to simultaneously control the first motor and the second motor to convey the holder in the height direction and rotate it about the rotation axis, preferably so that the vat, when mounted on the holder, does not exceed the predetermined second height during lifting and tilting.

This embodiment offers the advantage that the device according to the present invention is easy to operate by a user, as it is already configured for lifting and tilting the vat from the upright position to the tilted position simultaneously and in the desired coordinated way, preferably so that during lifting and tilting, the vat does not exceed the predetermined second height.

In an embodiment of the device according to the present invention, the predetermined first height substantially equals a height of a horizontal supply opening at a top of a processing unit for processing the mixture.

In an embodiment of the device according to the present invention, the predetermined first height equals a height of a horizontal supply opening at a top of a processing unit for processing the mixture.

In an embodiment of the device according to the present invention, the device further comprises a vat for a mixture. The mixture is preferably a dough. The vat is provided with a pouring opening for the mixture at a top.

In an embodiment of the device according to the present invention, the vat has predetermined dimensions.

In an embodiment of the device according to the present invention, the assembly comprises a processing unit for processing the mixture. The processing unit is provided with a horizontal supply opening for the mixture at a top. Preferably, the supply opening is positioned at the predetermined first height.

According to the invention, the device lifts the vat and the device tilts the vat from the upright position at ground level to the tilted position between the predetermined first height and the predetermined second height for pouring the mixture out of the pouring opening, wherein the conveyor system conveys the holder in the height direction for lifting the vat, wherein the conveyor system rotates the holder about the rotation axis perpendicular to the height direction for tilting the vat, wherein the conveyor system entrains the rotation axis when conveying the holder in the height direction, and wherein the holder is positioned at a predetermined first distance from the rotation axis.

According to the invention, the control unit, while lifting and tilting the vat from the upright position to the tilted position, simultaneously controls the first motor and the second motor to convey the holder in the height direction and rotate it about the rotation axis so that during lifting and tilting, the vat does not exceed the predetermined second height.

### Brief description of the drawings

The invention will hereafter be elucidated in further detail by means of the following description and the appended figures.
Figure 1 shows a schematic depiction of a use of a device according to an embodiment of the present invention with the vat in the upright position at ground level.
Figure 2 shows a schematic depiction of a device such as the one from Figure 1 with the vat in an intermediate, partially tilted position.
Figure 3 shows a schematic depiction of a device such as the one from Figure 1 with the vat in the tilted position.

### Modes for carrying out the invention

The present invention will hereafter be described with respect to particular embodiments and with reference to certain drawings, but the invention is not limited thereto and is defined only by the claims. The drawings shown here are merely schematic depictions and are non-limiting. In the drawings, the dimensions of certain parts may be exaggerated, meaning that the parts in question are not drawn to scale, for illustrative purposes only. The dimensions and the relative dimensions do not necessarily correspond to the actual reductions to practice of the invention.

Furthermore, terms such as "first", "second", "third" and the like are used in the description and in the claims for distinguishing between similar elements, and not necessarily for describing a sequential or chronological order. The terms in question are interchangeable under the appropriate circumstances and the embodiments of the invention can operate in other sequences than described or illustrated here.

Moreover, terms such as "top", "bottom", "over", "under" and the like are used in the description and the claims for descriptive purposes and not necessarily for indicating relative positions. The terms so used are interchangeable under the appropriate circumstances, and the embodiments of the invention can operate in other orientations than those described or illustrated herein.

The term "comprising" and derivative terms, as used in the claims, should not be interpreted as being restricted to the means listed respectively thereafter; the term does not exclude other elements or steps. It should be interpreted as specifying the stated features, integers, steps or components as referred to, without, however, precluding the presence or addition of one or more additional features, integers, steps or components, or groups thereof. Thus, the scope of the expression such as "a device comprising means A and B" is not limited to devices consisting only of components A and B. What is meant, on the contrary, is that with respect to the present invention, the only relevant components of the device are A and B.

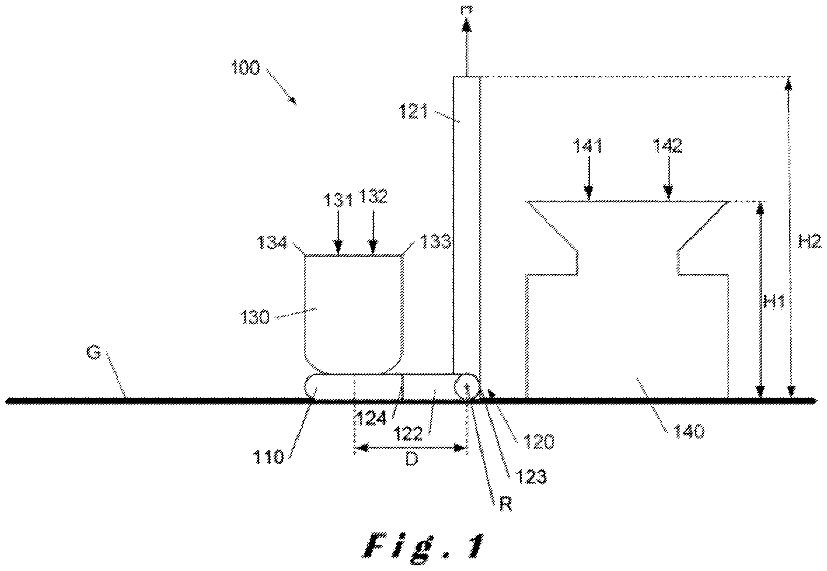

Figures 1-3 show a schematic depiction of a device 100 according to an embodiment of the present invention for lifting and tilting a vat 130 with a mixture, preferably a dough, with the purpose of pouring the mixture in the vat 130 into a processing unit 140 for processing the mixture. In case the mixture is a dough, the processing unit 140 may for example be arranged for letting the dough rise and for dividing the risen dough into smaller pieces for baking.

For pouring the mixture, the vat 130 is provided with a pouring opening 132 at the top 131 through which the mixture is poured from the vat 130 and into the processing unit, and the processing unit 140 is provided with a horizontal supply opening 142 at the top 141 through which the mixture is poured from the vat 130 into the processing unit 140.

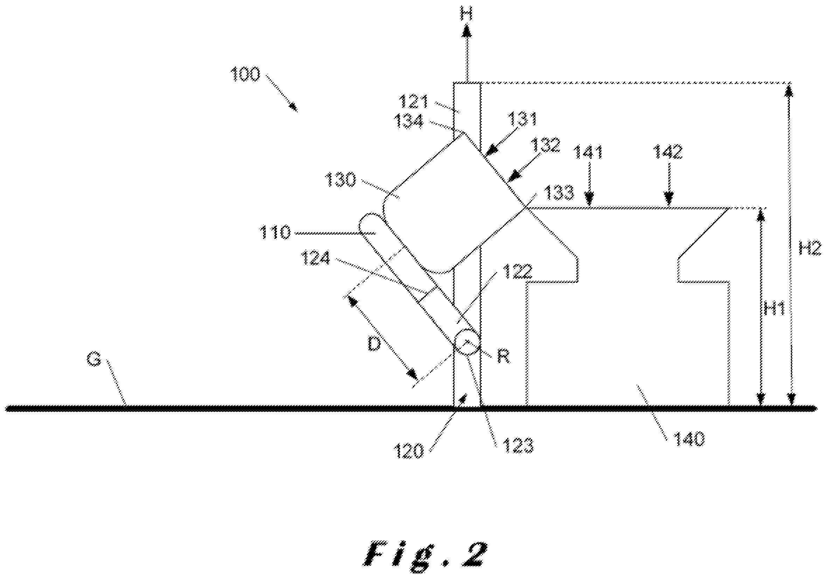

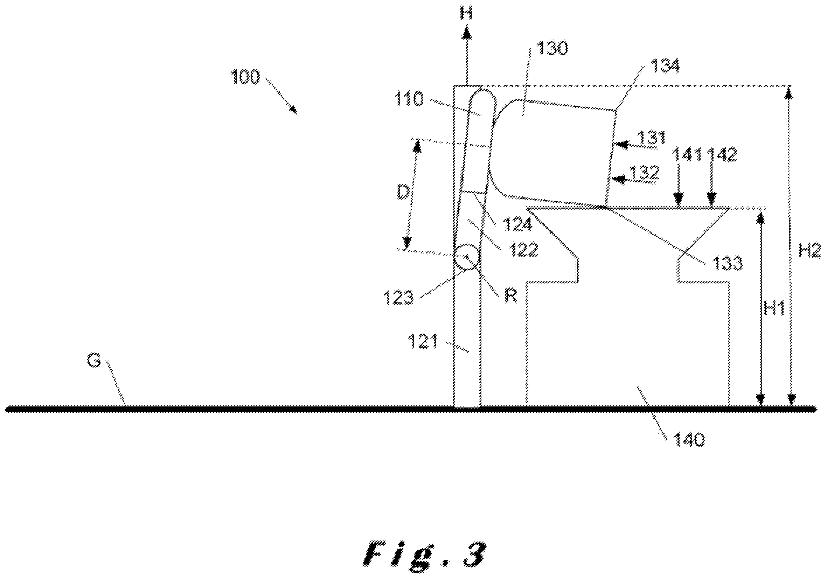

Figure 1 shows the device 100 with the vat 130 in an upright position at ground level G next to the processing unit 140. Next, Figure 2 shows the device 100 with the vat 130 in an intermediate, partially tilted position wherein the vat 130 is already partially lifted and tilted in the direction of the vat 130. Finally, Figure 3 shows the device 100 with the vat 130 in a tilted position above the supply opening 142 of the processing unit 140. Here, the vat 130 is located above a predetermined first height H1, which is level with the supply opening 142 of the processing unit 140. If sufficient clearance is available between the supply opening 142 and a ceiling of a space where the device 100 is set up, a slightly larger margin may be provided between the predetermined second height H1 and the height of the supply opening 142. In the tilted position, the vat 130 is located further below a predetermined second height H2, which at least coincides with the maximum height of the vat 130 in the tilted position. If sufficient clearance is available between the supply opening 142 and a ceiling of a space where the device 100 is set up, a slightly larger margin may be provided between the predetermined second height H2 and the maximum height of the vat 130 in the tilted position.

The device 100 comprises a holder 120 for the vat 130. The holder 120 is preferably arranged so that the vat 130 can be releasably mounted to it. For carrying out the lifting and tilting of the vat 130, the device 100 is further provided with a conveyor system 120 for the holder 110.

The conveyor system 120 comprises a vertical guide 121 extending along a height direction H. The vertical guide 121 may for example be a column 121, but it should be understood that other suitable types of vertical guides known to the person skilled in the art may also be used, such as for example a rail system.

The conveyor system 120 further comprises a supporting arm 122. A first end 123 of the supporting arm 122 is mounted to the vertical guide 121 in such a way that the supporting arm 122 is slidable on the vertical guide 121 along the height direction H, and so that the supporting arm 122 is rotatable about a rotation axis R. Here, the rotation axis R is perpendicular to the height direction H near the first end 123 of the supporting arm 122. Thus, the rotation axis R will slide together with the supporting arm 122 along the height direction H when sliding the supporting arm 122 on the vertical guide 121. The holder 110 for the vat 130 is mounted to a second end 124 of the supporting arm 122, so that the holder 110 and a vat mounted thereon 130 are located at the predetermined first distance D from the rotation axis R.

In this configuration of the conveyor system 120, by sliding the supporting arm 122 along the height direction H on the vertical guide 121, a vat 130 mounted to the holder 110 can be lifted in the height direction H, and by rotating the supporting arm 122 about the rotation axis R, the vat 130 mounted to the holder 110 can be tilted. The conveyor system 120 is arranged so that sliding the supporting arm 122 along the height direction H and rotating the supporting arm 122 about the rotation axis R may be carried out simultaneously for simultaneously lifting and tilting the vat 130.

In order to drive the sliding of the supporting arm 122 with the holder 110 along the height direction H on the vertical guide 121, the conveyor system 120 is provided with a first motor (not shown). In order to drive the rotating of the supporting arm 122 with the holder 110 about the rotation axis R, the conveyor system 120 is provided with a second motor (not shown). It should, however, be understood that the conveyor system 120 may also be provided with other suitable drive systems known to the person skilled in the art in order to drive the sliding and rotating of the supporting arm 122.

The conveyor system 120 is further provided with a control unit (not shown). The control unit is operationally connected to the first motor for controlling the first motor in driving the sliding of the supporting arm 122 with holder 110 on the vertical guide 121 along the height direction H, for lifting a vat 130 mounted to the holder 110. The control unit is also operationally connected to the second motor for controlling the second motor in driving the rotating of the supporting arm 122 with holder 110 about the rotation axis R for tilting a vat 130 mounted to the holder 110. The control unit is configured so that a vat 130 having known dimensions mounted to the holder 110, while being lifted and tilted from the upright position at ground level G to the tilted position, between the first height H1 and the second height H2, does not exceed the second height H2.

Lifting and tilting the vat 130 in this way, using the device 100 according to an embodiment of the present invention, will now be further elucidated in reference to Figures 1-3.

In Figure 1, the vat 130 is mounted to the holder 110 of the device 100, which is set up next to the processing unit 140, the supply opening 142 of which is located at the first height H1. The supporting arm 122 of the conveyor system 120 is located all the way at the bottom of the vertical guide 121 and extends horizontally in a direction away from the processing unit 140, so that the vat 130 is positioned at ground level G in the upright position. In this configuration, the pouring opening 132 at the top 131 of the vat 130 faces upward.

Next, the supporting arm 122 is slid upward along the height direction H on the vertical guide 121. Here, the supporting arm 122 is also rotated clockwise about the rotation axis R in the direction of the processing unit 140. This rotation allows the vat 130, before rising above the supply opening 142 of the processing unit 140, to be already partially tilted towards the processing unit 140. The latter is possible using the device 100 according to the present invention due to the holder 110, and therefore the vat 130, being mounted to the supporting arm 122 at the predetermined first distance D of the rotation axis R, so that enough clearance remains between the vat 130 and the processing unit 140 to allow the vat 130 to be tilted. Here, the vat 130 is lifted and tilted up to an intermediate, partially tilted position, as shown in Figure 2, wherein the upper edge 133 of the vat 130 facing the processing unit 140 is located at the first height H1 and is tilted substantially against the supply opening 142.

Next, the vat 130 is further lifted and tilted by sliding the supporting arm 122 upward on the vertical guide 121 along the height direction H, and by rotating the supporting arm 122 clockwise about the rotation axis R. These movements are carried out in a coordinated way so that the vat 130, in a first instance the upper edge 134 of the vat facing away from the processing unit 140, and the holder 110 cannot rise above the second height H2. Finally, as shown in Figure 3, the vat 130 then reaches the tilted position, in which it is located between the first height H1 and the second height H2 over the supply opening 142 of the processing unit 140. Here, the pouring opening 132 of the vat 130 is tilted downward under angle relative to the height direction H that is suitable for allowing the mixture to be easily poured from the vat 130 into the processing unit 140.

In the embodiment shown, the first height H1 is level with the height of the supply opening 142 of the processing unit 140, and the second height H2 is then at least a full width of the vat 130 above the first height H1. However, it should be understood by the person skilled in the art that a slightly larger margin may be provided between the height of the supply opening 142 and the first height H1, and between the maximum height of the vat 130 in the tilted position and the second height H2, depending on the available clearance between the supply opening 142 and a ceiling in a space where the device 100 is set up.

### References

- 100: device
- 110: holder
- 120: conveyor system
- 121: vertical guide
- 122: supporting arm
- 123: first position
- 124: second position
- 130: vat
- 131: top
- 132: pouring opening
- 133: upper edge

- 134: upper edge
- 140: processing unit
- 141: top
- 142: supply opening
- G: ground level
- H1: first height
- H2: second height
- H: height direction
- R: rotation axis
- D: first distance

## Claims

1. Use of a device (100) for lifting and tilting a vat (130) with a mixture, preferably a dough, wherein the vat (130) is provided with a pouring opening (132) for the mixture at a top (131), wherein the device (100) is arranged for lifting and tilting the vat (130) from an upright position at ground level (G) to a tilted position between a predetermined first height (H1) and a predetermined second height (H2) for pouring the mixture out of the pouring opening (132), wherein the device (100) comprises a holder (110) for the vat (130), wherein the device (100) comprises a conveyor system (120) for the holder (110), wherein the conveyor system (120) is arranged for conveying the holder (110) in a height direction (H) for lifting the vat (130), wherein the conveyor system (120) is arranged for rotating the holder (110) about a rotation axis (R) perpendicular to the height direction (H) for tilting the vat (130), wherein the conveyor system (120) is arranged for entraining the rotation axis (R) when conveying the holder (110) in the height direction (H), and wherein the holder (110) is positioned at a predetermined first distance (D) from the rotation axis (R), wherein the conveyor system (120) is configured, while lifting and tilting the vat (130) from the upright position to the tilted position, to simultaneously convey the holder (110) in the height direction (H) and rotate it about the rotation axis (R) so that during lifting and tilting, the vat (130) does not exceed the predetermined second height (H2), wherein the second height is the maximum height of the vat relative to the ground level in the final tilted position of the vat,
**characterised in that**
the conveyor system (120) comprises a first motor for driving the conveyance in the height direction (H) of the holder (110), wherein the conveyor system (120) comprises a second motor for driving the rotation about the rotation axis (R) of the holder (110), and wherein the conveyor system (120) comprises a control unit for controlling the first motor and the second motor, wherein the control unit is configured, while lifting and tilting the vat (130) from the upright position to the tilted position, to simultaneously control the first motor and the second motor to convey the holder (110) in the height direction (H) and to rotate it about the rotation axis (R) so that during lifting and tilting, the vat (130) does not exceed the predetermined second height (H2), wherein the device (100) lifts and tilts the vat (130) from the upright position at ground level (G) to the tilted position between the predetermined first height (H1) and the predetermined second height (H2) for pouring the mixture out of the pouring opening (132), wherein the conveyor system (120) conveys the holder (110) in the height direction (H) for lifting the vat (130), wherein the conveyor system (120) rotates the holder (110) about the rotation axis (R) perpendicular to the height direction (H) for tilting the vat (130), wherein the conveyor system (120) entrains the rotation axis (R) when conveying the holder (110) in the height direction (H), and wherein the holder (110) is positioned at a predetermined first distance (D) from the rotation axis (R), wherein the control unit, while lifting and tilting the vat (130) from the upright position to the tilted position, simultaneously controls the first motor and the second motor to convey the holder (110) in the height direction (H) and rotate it about the rotation axis (R) so that during lifting and tilting, the vat (130) does not exceed the predetermined second height (H2).

2. Use of the device (100) according to the preceding claim, wherein the conveyor system (120) comprises a vertical guide (121) extending along the height direction (H), wherein the conveyor system (120) comprises a supporting arm (122) for the holder (110), wherein the supporting arm (122) is mounted to the vertical guide (121) at a first position (123) along the supporting arm (122) so that the supporting arm (122) is slidable on the vertical guide (121) along the height direction (H) and so that the supporting arm (122) is rotatable about the rotation axis (R), wherein the holder (110) is mounted to the supporting arm (122) at a second position (124) along the supporting arm (122) so that the holder (110) is positioned at the predetermined first distance (D) from the rotation axis (R).

3. Use of the device (100) according to any of the preceding claims, wherein the predetermined first height (H1) substantially equals a height of a horizontal supply opening (142) at a top (141) of a processing unit (140) for processing the mixture.

4. Use of the device (100) according to any of the preceding claims, wherein the device further comprises a vat (130) for a mixture, preferably a dough, wherein the vat (130) is provided with a pouring opening (132) for the mixture at a top (131).

5. Use of the device (100) according to claim 4, wherein the vat (130) has predetermined dimensions.

6. Use of the device (100) according to claim 4 or 5,
wherein the assembly comprises a processing unit (140) for processing the mixture, wherein the processing unit (140) is provided with a horizontal supply opening (142) for the mixture at a top (141).

## Patentansprüche

1. Verwendung einer Vorrichtung (100) zum Heben und Kippen einer Wanne (130) mit einer Mischung, bevorzugt einem Teig, wobei die Wanne (130) an einer Oberseite (131) mit einer Gießöffnung (132) versehen ist, wobei die Vorrichtung (100) zum Heben und Kippen der Wanne (130) aus einer aufrechten Position auf Bodenniveau (G) in eine gekippte Position zwischen einer voreingestellten ersten Höhe (H1) und einer voreingestellten zweiten Höhe (H2) angeordnet ist, um die Mischung aus der Gießöffnung (132) zu gießen, wobei die Vorrichtung (100) einen Halter (110) für die Wanne (130) umfasst, wobei die Vorrichtung (100) ein Förderbandsystem (120) für den Halter (110) umfasst, wobei das Förderbandsystem (120) angeordnet ist, um den Halter (110) in eine Höhenrichtung (H) zu befördern, um die Wanne (130) zu heben, wobei das Förderbandsystem (120) angeordnet ist, um den Halter (110) um eine Drehachse (R) senkrecht zur Höhenrichtung (H) zu drehen, um die Wanne (130) zu kippen, wobei das Förderbandsystem (120) angeordnet ist, um die Drehachse (R) mitzunehmen, wenn der Halter (110) in die Höhenrichtung (H) befördert wird, und wobei der Halter (110) in einem voreingestellten ersten Abstand (D) von der Drehachse (R) positioniert ist, wobei das Förderbandsystem (120) konfiguriert ist, um, während des Hebens und Kippens der Wanne (130) aus der aufrechten Position in die gekippte Position, gleichzeitig den Halter (110) in die Höhenrichtung (H) zu befördern und ihn um die Drehachse (R) zu drehen, sodass die Wanne (130) während des Hebens und Kippens die voreingestellte zweite Höhe (H2) nicht überschreitet, wobei die zweite Höhe die maximale Höhe der Wanne in Bezug zum Bodenniveau in der gekippten Endposition der Wanne ist, **dadurch gekennzeichnet, dass** das Förderbandsystem (120) einen ersten Motor zum Antreiben der Beförderung in die Höhenrichtung (H) des Halters (110) umfasst, wobei das Förderbandsystem (120) einen zweiten Motor zum Antreiben der Drehung um die Drehachse (R) des Halters (110) umfasst, und wobei das Förderbandsystem (120) eine Steuereinheit zum Steuern des ersten Motors und des zweiten Motors umfasst, wobei die Steuereinheit konfiguriert ist, um, während des Hebens und Kippens der Wanne (130) aus der aufrechten Position in die gekippte Position, gleichzeitig den ersten Motor und den zweiten Motor zu steuern, um den Halter (110) in die Höhenrichtung (H) zu befördern und ihn um die Drehachse (R) zu drehen, sodass die Wanne (130) während des Hebens und Kippens die voreingestellte zweite Höhe (H2) nicht überschreitet, wobei die Vorrichtung (100) die Wanne (130) aus der aufrechten Position auf Bodenniveau (G) in die gekippte Position zwischen der voreingestellten ersten Höhe (H1) und der voreingestellten zweiten Höhe (H2) hebt und kippt, um die Mischung aus der Gießöffnung (132) zu gießen, wobei das Förderbandsystem (120) den Halter (110) in die Höhenrichtung (H) befördert, um die Wanne (130) zu heben, wobei das Förderbandsystem (120) den Halter (110) um die Drehachse (R) senkrecht zur Höhenrichtung (H) dreht, um die Wanne (130) zu kippen, wobei das Förderbandsystem (120) die Drehachse (R) mitführt, wenn es den Halter (110) in die Höhenrichtung (H) befördert, und wobei der Halter (110) in einem voreingestellten ersten Abstand (D) von der Drehachse (R) positioniert ist, wobei die Steuereinheit, während des Hebens und Kippens der Wanne (130) aus der aufrechten Position in die gekippte Position, gleichzeitig den ersten Motor und den zweiten Motor steuert, um den Halter (110) in die Höhenrichtung (H) zu befördern und ihn um die Drehachse (R) zu drehen, sodass die Wanne (130) während des Hebens und Kippens die voreingestellte zweite Höhe (H2) nicht überschreitet.

2. Verwendung der Vorrichtung (100) nach dem vorigen Anspruch, wobei das Förderbandsystem (120) eine vertikale Führung (121) umfasst, die sich entlang der Höhenrichtung (H) erstreckt, wobei das Förderbandsystem (120) einen Stützarm (122) für den Halter (110) umfasst, wobei der Stützarm (122) in einer ersten Position (123) entlang des Stützarms (122) an die vertikale Führung (121) montiert ist, sodass der Stützarm (122) verschiebbar auf der vertikalen Führung (121) entlang der Höhenrichtung (H) ist und sodass der Stützarm (122) drehbar um die Drehachse (R) ist, wobei der Halter (110) in einer zweiten Position (124) entlang des Stützarms (122) an den Stützarm (122) montiert ist, sodass der Halter (110) im voreingestellten ersten Abstand (D) von der Drehachse (R) positioniert ist.

3. Verwendung der Vorrichtung (100) nach irgendeinem der vorigen Ansprüche, wobei die voreingestellte erste Höhe (H1) im Wesentlichen gleich einer Höhe einer horizontalen Zufuhröffnung (142) an einer Oberseite (141) einer Verarbeitungseinheit (140) zum Verarbeiten der Mischung ist.

4. Verwendung der Vorrichtung (100) nach irgendeinem der vorigen Ansprüche, wobei die Vorrichtung ferner eine Wanne (130) für eine Mischung, bevorzugt einen Teig, umfasst, wobei die Wanne (130) an einer Oberseite (131) mit einer Gießöffnung (132) für die Mischung versehen ist.

5. Verwendung der Vorrichtung (100) nach Anspruch 4, wobei die Wanne (130) voreingestellte Abmessungen hat.

6. Verwendung der Vorrichtung (100) nach Anspruch 4 oder 5, wobei die Anordnung eine Verarbeitungseinheit (140) zum Verarbeiten der Mischung umfasst, wobei die Verarbeitungseinheit (140) an einer Oberseite (141) mit einer horizontalen Zufuhröffnung (142) für die Mischung versehen ist.

## Revendications

1. Utilisation d'un dispositif (100) pour soulever et incliner une cuve (130) avec un mélange, de préférence une pâte, dans laquelle la cuve (130) est dotée d'une ouverture de versement (132) pour le mélange au niveau d'une partie supérieure (131), dans laquelle le dispositif (100) est conçu pour soulever et incliner la cuve (130) d'une position verticale au niveau du sol (G) à une position inclinée entre une première hauteur (H1) prédéterminée et une seconde hauteur (H2) prédéterminée pour verser le mélange par l'ouverture de versement (132), dans laquelle le dispositif (100) comprend un support (110) pour la cuve (130), dans laquelle le dispositif (100) comprend un système transporteur (120) pour le support (110), dans laquelle le système transporteur (120) est conçu pour transporter le support (110) dans un sens de la hauteur (H) pour soulever la cuve (130), dans laquelle le système transporteur (120) est conçu pour faire tourner le support (110) autour d'un axe de rotation (R) perpendiculairement au sens de la hauteur (H) pour incliner la cuve (130), dans laquelle le système transporteur (120) est conçu pour entraîner l'axe de rotation (R) lors du transport du support (110) dans le sens de la hauteur (H), et dans laquelle le support (110) est positionné à une première distance (D) prédéterminée de l'axe de rotation (R), dans laquelle le système transporteur (120) est configuré, tout en soulevant et en inclinant la cuve (130) de la position verticale à la position inclinée, pour transporter simultanément le support (110) dans le sens de la hauteur (H) et le faire tourner autour de l'axe de rotation (R) de sorte que lors du levage et de l'inclinaison, la cuve (130) ne dépasse pas la seconde hauteur (H2) prédéterminée, dans laquelle la seconde hauteur est la hauteur maximale de la cuve par rapport au niveau du sol dans la position finale inclinée de la cuve,
**caractérisée en ce que** le système transporteur (120) comprend un premier moteur pour entraîner le transport dans le sens de la hauteur (H) du support (110), dans laquelle le système transporteur (120) comprend un second moteur pour entraîner la rotation autour de l'axe de rotation (R) du support (110), et dans laquelle le système transporteur (120) comprend une unité de commande pour commander le premier moteur et le second moteur, dans laquelle l'unité de commande est configurée, tout en soulevant et en inclinant la cuve (130) de la position verticale à la position inclinée, pour commander simultanément le premier moteur et le second moteur pour transporter le support (110) dans le sens de la hauteur (H) et le faire tourner autour de l'axe de rotation (R) de sorte que pendant le levage et l'inclinaison, la cuve (130) ne dépasse pas la seconde hauteur (H2) prédéterminée, dans laquelle le dispositif (100) soulève et incline la cuve (130) de la position verticale au niveau du sol (G) à la position inclinée entre la première hauteur (H1) prédéterminée et la seconde hauteur (H2) prédéterminée pour verser le mélange par l'ouverture de versement (132), dans laquelle le système transporteur (120) transporte le support (110) dans le sens de la hauteur (H) pour soulever la cuve (130), dans laquelle le système transporteur (120) fait tourner le support (110) autour de l'axe de rotation (R) perpendiculairement au sens de la hauteur (H) pour incliner la cuve (130), dans laquelle le système transporteur (120) entraîne l'axe de rotation (R) lors du transport du support (110) dans le sens de la hauteur (H), et dans laquelle le support (110) est positionné à une première distance (D) prédéterminée de l'axe de rotation (R), dans laquelle l'unité de commande, tout en soulevant et en inclinant le cuve (130) de la position verticale à la position inclinée, commande simultanément le premier moteur et le second moteur pour transporter le support (110) dans le sens de la hauteur (H) et le faire tourner autour de l'axe de rotation (R) de sorte que pendant le levage et l'inclinaison, la cuve (130) ne dépasse pas la seconde hauteur (H2) prédéterminée.

2. Utilisation du dispositif (100) selon la revendication précédente, dans laquelle le système transporteur (120) comprend un guide vertical (121) s'étendant le long du sens de la hauteur (H), dans laquelle le système transporteur (120) comprend un bras de support (122) pour le support (110), dans laquelle le bras de support (122) est monté sur le guide vertical (121) en une première position (123) le long du bras de support (122) de telle sorte que le bras de support (122) puisse coulisser sur le guide vertical (121) le long du sens de la hauteur (H) et de sorte que le bras de support (122) puisse tourner autour de l'axe de rotation (R), dans laquelle le support (110) est monté sur le bras de support (122) en une seconde position (124) le long du bras de support (122) de sorte que le support (110) soit positionné à la première distance (D) prédéterminée de l'axe de rotation (R).

3. Utilisation du dispositif (100) selon l'une quelconque des revendications précédentes, dans laquelle la première hauteur (H1) prédéterminée est sensiblement égale à la hauteur d'une ouverture d'alimentation horizontale (142) au niveau d'une partie supérieure (141) d'une unité de traitement (140) pour traiter le mélange.

4. Utilisation du dispositif (100) selon l'une quelconque des revendications précédentes, dans laquelle le dispositif comprend en outre une cuve (130) pour un mélange, de préférence une pâte, dans laquelle la cuve (130) est dotée d'une ouverture de versement (132) pour le mélange au niveau d'une partie supérieure (131).

5. Utilisation du dispositif (100) selon la revendication 4, dans laquelle la cuve (130) présente des dimensions prédéterminées.

6. Utilisation du dispositif (100) selon la revendication 4 ou 5, dans laquelle l'ensemble comprend une unité de traitement (140) pour traiter le mélange, dans laquelle l'unité de traitement (140) est dotée d'une ouverture d'alimentation horizontale (142) pour le mélange au niveau d'une partie supérieure (141).
